# EUROPEAN PATENT APPLICATION

(11) **EP 4 049 563 A1**
(43) Date of publication of application: **31.08.2022**
(21) Application number: 20888927.9
(22) Date of filing: 17.11.2020
(51) Int. Cl.: A47J 37/06, H05B 1/02, H05B 3/03, H05B 3/16

(54) **ELECTRIC GRILL USING HEATING PAINT**

(30) Priority: 18.11.2019 KR 20190147690
(71) Applicant: Bioneer Corporation, Daejeon 34302 (KR)
(72) Inventor: PARK, Han Oh, Sejong-si 30151 (KR); KIM, Jae Ha, Daejeon 34169 (KR)
(74) Representative: von Tietzen und Hennig, Nikolaus
(86) International application number: PCT/KR2020/016179
(87) International publication number: WO 2021/101212

(57) **Abstract**

The present invention relates to an electric grill capable of precisely controlling the temperature of a grilling plate by directly applying a heating paste including carbon nanotubes to the bottom of the grilling plate. The present invention comprises: the grilling plate on which food to be cooked is placed; a heating body that is applied so as to be arranged on the lower portion of the grilling plate so as to heat the grilling plate; a heat insulating material which is disposed to be spaced apart from the heating body at a predetermined distance so as to block heat conduction to the outside; and a temperature sensor which is disposed between the heating body and the heat insulating material so as to measure the temperature of an upper plate, wherein a pair of electrodes for supplying electricity to the heating body are arranged along opposite edges of both sides of the heating body, and a heating region can be divided and controlled by dividing and combining the pair of electrodes, the heating body, the coating thickness, and the like.

## Description

### [Technical Field]

The present invention relates to an electric grill using a heating paint, and more particularly, to an electric grill in which a temperature of a grilling plate may be precisely controlled by directly applying a heating paste including carbon nanotubes to a bottom surface of the grilling plate.

### [Background Art]

In general, a gas range or a gas burner has been mainly used as a device for cooking food or grilling meat at home or a restaurant. A conventional heating device using such gas as energy has the advantage such as easiness of use due to the good spread of facilities and low fuel cost, but has a limitation in a use place because gas pipe line facilities are essential. In addition, the heating device using the gas as the energy generates heat through direct combustion, and thus, a risk of explosion or fire is very high. Therefore, recently, a heating device using electric energy having high safety, for example, an electric grilling plate, has been widely spread to homes.

The electric grilling plate belongs to an electric heater receiving electric energy and generating heat. The electric heater generally includes an electric heating part disposed inside a main body and generating heat using electric energy and a grilling plate such as a metal plate or a stone plate disposed on the electric heating part, and is configured to so that the heat of the electric heating part is transferred to the grilling plate disposed on the electric heating part.

Such an electric grilling plate may be used anywhere as long as electric facilities are provided, and has an advantage that there is almost no limitation on a use place because the electricity facilities are relatively well spread as compared with gas pipe line facilities. In addition, the electric grilling plate has relatively high safety and excellent convenience as compared with a device using a gas. Nevertheless, a use rate of the electric grilling plate is significantly lower than that of the device using the gas, which may be mainly caused by deterioration of a cooking quality due to relatively low heating power.

Specifically, a conventional electric grilling plate generally includes a grilling plate, which is a thick hot plate formed of stone or a metal, and an electric heating part disposed at a position spaced apart from the grilling plate in a downward direction by a predetermined distance. In this case, the electric heating part has a linear shape, is generally called a heating wire, and is disposed in a state in which it is bent several times in a zigzag shape. The conventional electric grilling plate using such a heating wire has a problem that heat energy applied to the grilling plate is not uniformly transferred to the grilling plate. In addition, since there is a spaced space formed between the grilling plate and the heating wire, there is a problem that heat loss is large due to a region in which heat may not be directly applied to the grilling plate. Due to these problems, the conventional electric grilling plate using the heating wire has a very slower temperature rising rate than the device using the gas, such that it takes a long time to preheat the conventional electric grilling plate in order to cook food at an appropriate temperature, and accordingly, a cooking quality of food is very poor.

In addition, since heat is applied locally, there is a limitation in a type of material used for the grilling plate depending on specific heat of the material. For example, in a case where a stone plate is used as the grilling plate, a local temperature difference is severe due to a relatively high specific heat of stone, and in a case where the temperature difference becomes severe, a fatal problem such as a crack may occur in the stone plate.

### [Disclosure]

### [Technical Problem]

An object of the present invention is to provide an electric grill in which thermal efficiency is excellent, a reaction time required for reaching a target temperature is fast, such that a preheating time is shortened, and cooking quality is excellent.

Another object of the present invention is to provide an electric grill in which a temperature of a grilling plate may be precisely controlled by directly applying a heating paste to a bottom surface of the grilling plate and a heating region may be divided and controlled by dividing and combining electrode pairs supplying electricity to heating bodies and application regions, application thicknesses, and the like, of the heating bodies.

### [Technical Solution]

In one general aspect, an electric grill using a heating paint includes: a grilling plate on which food to be cooked is put; a heating body applied and disposed on a lower portion of the grilling plate and capable of heating the grilling plate; a heat insulating material disposed to be spaced apart from the heating body by a predetermined interval and blocking heat conduction to the outside; and a temperature sensor disposed below the heating body and measuring a temperature of an upper plate, wherein the heating body is produced by applying a carbon nanotube (CNT) heating paste to the lower portion of the grilling plate, and electrode pairs for supplying electricity to the heating body are disposed along both edges of the heating body facing each other, such that a temperature of the grilling plate may be precisely controlled, and a heating region may be divided and controlled.

### [Advantageous Effects]

With an electric grill of the present invention, thermal efficiency may be excellent, a reaction time required for reaching a target temperature may be fast, such that a preheating time may be shortened, cooking quality may be excellent, and a temperature of a grilling plate may be precisely controlled by directly applying a heating paste to a bottom surface of the grilling plate.

In addition, a heating region may be divided and controlled by dividing and combining electrode pairs supplying electricity to heating bodies and application regions, application thicknesses, and the like, of the heating bodies, and a user may visually easily recognize the heating region and a heating temperature.

### [Description of Drawings]

FIG. 1 is a perspective view of an electric grill of the present invention.
FIG. 2 is an exploded perspective view of the electric grill of the present invention.
FIG. 3 is a conceptual diagram for describing an embodiment of heating bodies and divided electrodes of the present invention.
FIG. 4 is a conceptual diagram for describing another embodiment of heating bodies and divided electrodes of the present invention.
FIG. 5 is a conceptual diagram for describing still another embodiment of heating bodies and divided electrodes of the present invention.
FIG. 6 is a conceptual diagram for describing an embodiment of application thicknesses of the heating bodies of the present invention.
FIG. 7 is a conceptual diagram for describing another embodiment of application thicknesses of the heating bodies of the present invention.

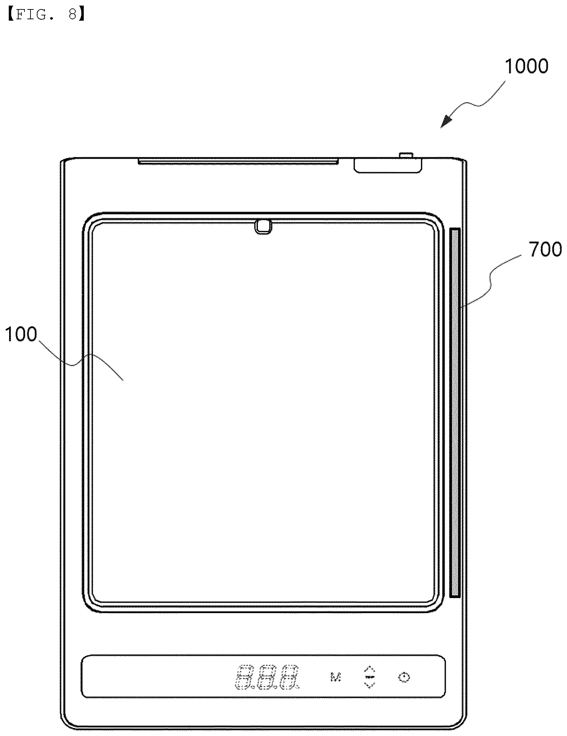

FIG. 8 is a conceptual diagram for describing temperature display of the electric grill of the present invention.
FIG. 9 is a conceptual diagram for describing a temperature display unit of the present invention.

### [Best Mode]

In one general aspect, an electric grill using a heating paint includes: a grilling plate on which food to be cooked is put; a heating body applied and disposed on a lower portion of the grilling plate and capable of heating the grilling plate; a heat insulating material disposed to be spaced apart from the heating body by a predetermined interval and blocking heat conduction to the outside; and a temperature sensor disposed below the heating body and measuring a temperature of an upper plate, wherein the heating body is produced by applying a carbon nanotube (CNT) heating paste to the lower portion of the grilling plate, and electrode pairs for supplying electricity to the heating body are disposed along both edges of the heating body facing each other.

In addition, a plurality of electrodes disposed along the both edges of the heating body facing each other may be formed to be divided into a plurality of electrodes, and a heating region may be controlled by supplying electricity to only some of the plurality of electrode pairs.

In addition, the grilling plate may be surface-treated so that the heating region is divided and displayed in response to the division of the electrode pairs.

In addition, the heating body may be formed by applying the CNT heating paste to the lower portion of the grilling plate, and the CNT heating paste may be applied so that the heating body has a plurality of divided regions.

In addition, the electrode pairs for supplying the electricity to each of the divided heating bodies may be disposed along both edges of the divided heating bodies.

In addition, electrode pairs disposed adjacent to each other among the electrode pairs disposed along the both edges of the divided heating bodies may be arranged at upper and lower portions based on an intermediate insulating material.

In addition, the heating body may be formed by applying the CNT heating paste to the lower portion of the grilling plate, and application thicknesses of the heating paste may be different from each other depending on positions.

In addition, electrodes disposed along the both edges of the heating body facing each other may be formed to be divided into a plurality of electrodes, and application thicknesses of the heating paste may be different from each other in a direction of the both edges where the electrodes are disposed.

In addition, the application thickness of the heating paste may become smaller from the center to an outer side.

In addition, a temperature display unit of which a color is differently displayed depending on a temperature of the grilling plate may be formed on one side of the grilling plate.

In addition, the temperature display unit may include a color-changing material of which a color is changed depending on the temperature of the grilling plate.

In addition, the temperature display unit may include: a plurality of temperature sensors disposed at a plurality of positions; and a plurality of light emitting diodes (LEDs) displaying different colors depending on temperatures measured according to positions.

In addition, a waveguide may be disposed on one side of the plurality of LEDs, and the waveguide may be disposed on one side of the grilling plate.

### [Mode for Invention]

Hereinafter, an electric grill using a heating paint according to the present invention will be described in detail with reference to the accompanying drawings.

The drawings provided herein are provided by way of example so that the spirit of the present invention may be sufficiently transferred to those skilled in the art. Therefore, the present invention is not limited to the drawings, and may be modified in many different forms. In addition, the drawings will be exaggerated in order to clear the spirit of the present invention.

The technical terms and the scientific terms herein have the general meaning understood by those skilled in the art to which the present invention pertains unless otherwise defined, and a description of the known functions and configurations unnecessarily obscuring the gist of the present invention will be omitted in the following description and the accompanying drawings.

A singular form of the term used herein may be construed to include a plural form unless otherwise indicated. The terms 'layer', 'plate', or 'film' as used herein means that each material forms a continuum and has a dimension of a relatively small thickness as compared with a width and a length. Accordingly, in the present specification, the term should not be interpreted as a two-dimensional flat plane.

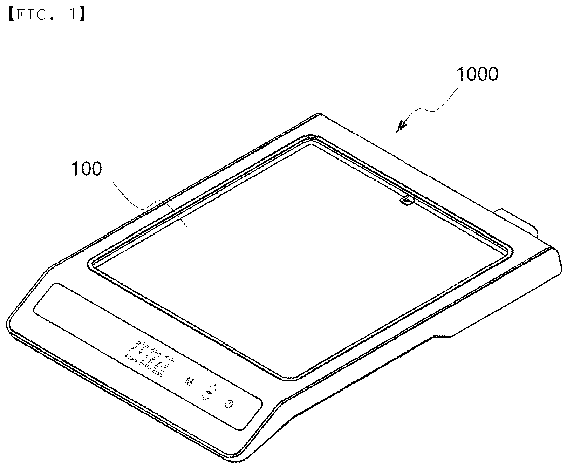

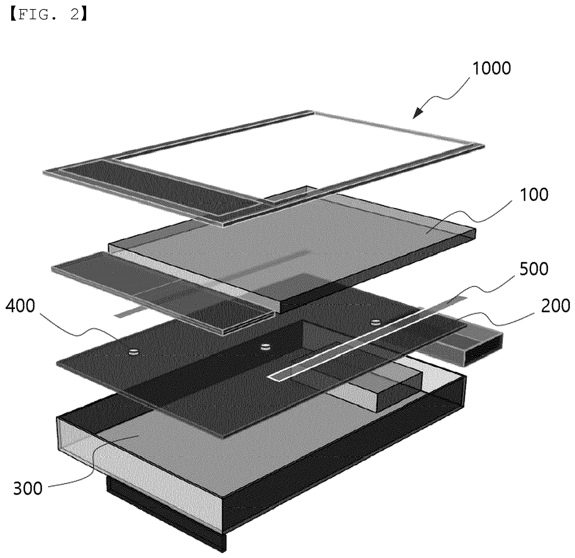

FIGS. 1 and 2 are, respectively, a perspective view and a conceptual exploded perspective view of an electric grill 1000 of the present invention. Referring to FIGS. 1 and 2, the electric grill 1000 of the present invention is configured to include a grilling plate 100 on which food to be cooked is put, heating bodies 110 and 120 applied and disposed on a lower portion of the grilling plate 100 and capable of heating the grilling plate 100, a heat insulating material 200 disposed to be spaced apart from the heating bodies 110 and 120 by a predetermined interval and blocking heat conduction to the outside, and a temperature sensor 400 disposed below the heating bodies 110 and 120 and measuring a temperature of an upper plate. In this case, the heating bodies 110 and 120 are produced by applying a carbon nanotube (CNT) heating paste to the lower portion of the grilling plate 100, and electrode pairs 500 for supplying electricity to the heating bodies 110 and 120 are disposed and formed along both edges of the heating bodies 110 and 120 facing each other.

The electrode pairs 500 disposed along both edges of the heating bodies 110 and 120 supply electricity to the CNT heating paste applied to the lower portion of the grilling plate 100, and CNTs are heated by the supplied electricity to generate heat for cooking food. In this case, an amount of generated heat increases as an application thickness of the CNT heating paste increases and an amount of a current supplied through the electrode pairs 500 increases.

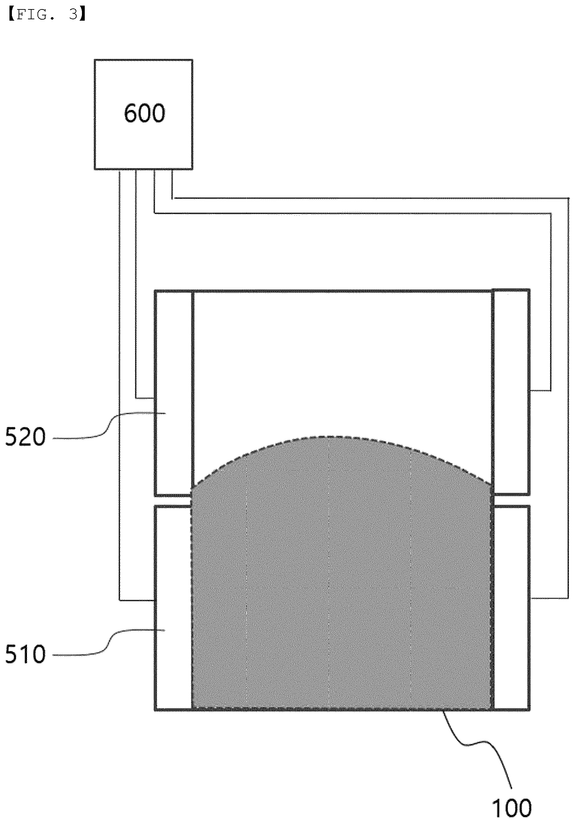

FIG. 3 is a conceptual diagram for describing an embodiment of heating bodies 110 and 120 and divided electrodes 510, 520, 530, and 540 of the present invention. Referring to FIG. 3, the electrode pairs 500 disposed along both edges of the heating bodies 110 and 120 facing each other may be formed to be divided into a first electrode pair 510 and a second electrode pair 520 having a predetermined length. As described above, the electrode pairs 500 for supplying the electricity to the heating bodies 110 and 120 are formed to be divided, and the electricity is supplied only to the electrode pair 500 in a region in which heat generation is required, a heating region of the electric grill 1000 may be divided and controlled. That is, in a case where the electricity is supplied only to the first electrode pair 510 positioned on the lower side in FIG. 3, heat is generated only in a lower region as indicated by a shade, and heat is not generated in an upper region to which the electricity is not supplied. In this case, since the electric grill 1000 of the present invention includes the heating bodies formed by applying the CNT heating paste, even though the electricity is supplied only to the lower side, heat is partially and continuously generated up to a central portion where the CNTs are disposed.

Meanwhile, the grilling plate 100 may be formed to have different surface treatment so that the heating region is divided and displayed in response to the division of the electrode pairs 500, and through this, a user divides a heating selection region and disposes a desired cooking material. For example, in the lower region, a continuous shape curved in a predetermined direction may be put or ruggedness may be formed in the shape of a steak grill. In this case, when meat is grilled in the corresponding region, a heating form of steak grilling may be implemented, and an effect of draining oil along a curvature may be obtained.

It has been illustrated in FIG. 3 that the electrode pairs 500 are divided in a ratio of 1:1, but the electrode pairs 500 may be divided in various ratios if necessary, and since it may be difficult to confirm the divided region from the outside, a predetermined line may be marked on a surface of the grilling plate 100.

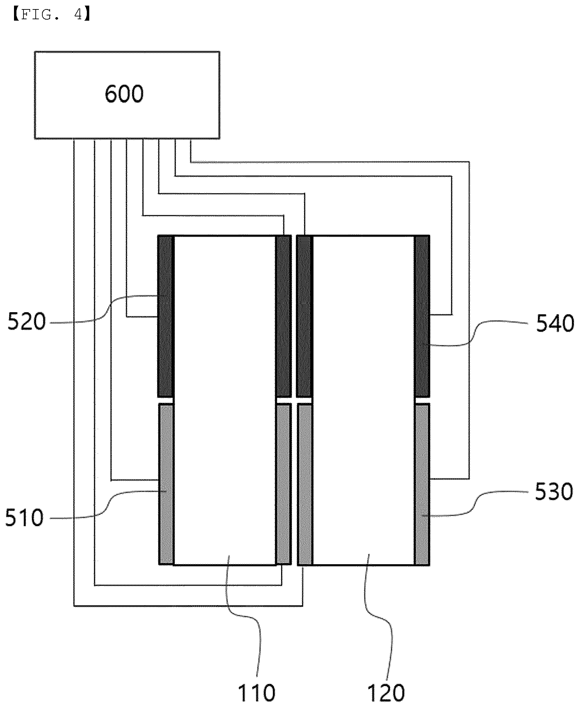

FIG. 4 is a conceptual diagram for describing another embodiment of heating bodies 110 and 120 and divided electrodes 510, 520, 530, and 540 of the present invention. In another embodiment of the present invention, the heating bodies 110 and 120 may be formed by applying the CNT heating paste to the lower portion of the grilling plate 100, and the CNT heating paste may be applied so that a plurality of divided regions are formed. Referring to FIG. 4, an application region of the heating bodies 110 and 120 is divided into two regions, that is, left and right regions in FIG. 4, such that the heating bodies 110 and 120 may be formed to be divided into a first heating body 110 and a second heating body 120, and the electrode pairs 500 may be divided and disposed at each of the divided heating bodies 110 and 120. When the heating bodies 110 and 120 and the electrode pairs 500 are divided and disposed as described above, a control unit 600 may select and control whether or not to generate heat and heating temperatures in four regions by utilizing a first electrode pair 510 and a second electrode pair 520 formed at the first heating body 110 and a third electrode pair 530 and a fourth electrode pair 540 formed at a second heating body 120.

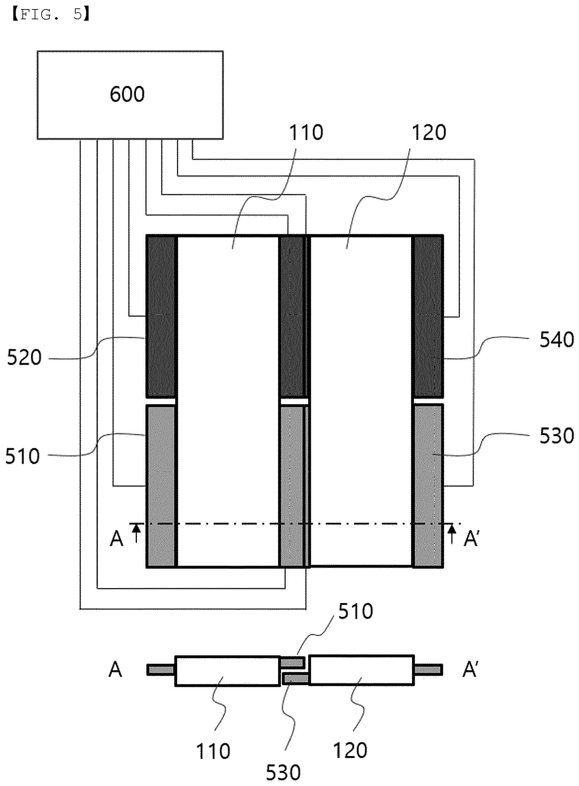

FIG. 5 is a conceptual diagram for describing still another embodiment of heating bodies 110 and 120 and divided electrodes 510, 520, 530, and 540 of the present invention. When all of the electrode pairs 500 are divided and formed at the heating bodies 110 and 120, electrodes disposed inside occupy a predetermined width, so there may be a problem that a region in which the heating paste may not be applied is widely formed, but in still another embodiment of the present invention, electrodes of other electrode pairs 500 disposed inside are disposed at upper and lower portions in order to solve such a problem. Referring to a cross section taken along line A-A of FIG. 5, one electrode of the first electrode pair 510 is disposed at the upper portion, and one electrode of the second electrode pair 520 is disposed at the lower portion, such that a region in which the heating paste may not be applied may be decreased. In this case, an insulating material may be disposed between the electrodes vertically overlapping each other to perform electrical insulation.

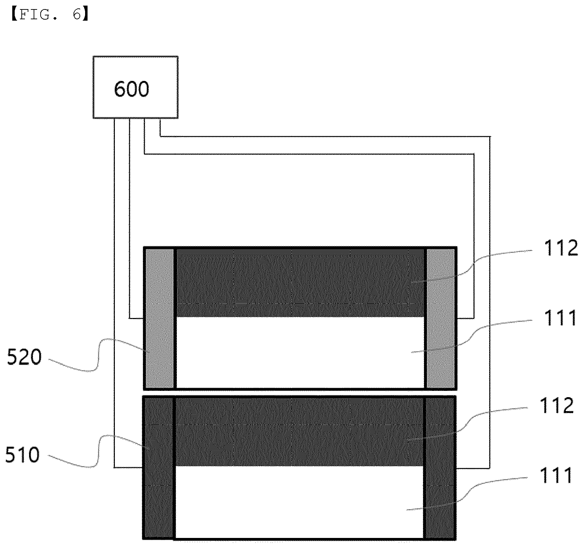

FIG. 6 is a conceptual diagram for describing an embodiment of controlling temperatures of heating regions to be different from each other by making application thicknesses of the heating bodies 110 and 120 of the present invention different from each other. Referring to FIG. 6, application thicknesses of the heating paste may be different from each other in a direction of both edges where the electrodes are disposed. As described above, when the CNT heating paste is applied at different thicknesses, a region in which the CNT heating paste is thickly applied is heated to a higher temperature than a region in which the CNT heating paste is thinly applied. Due to the divided electrode pairs 510, 520, 530, and 540 and the different application thicknesses as described above, temperatures of various regions may be controlled to be different from each other.

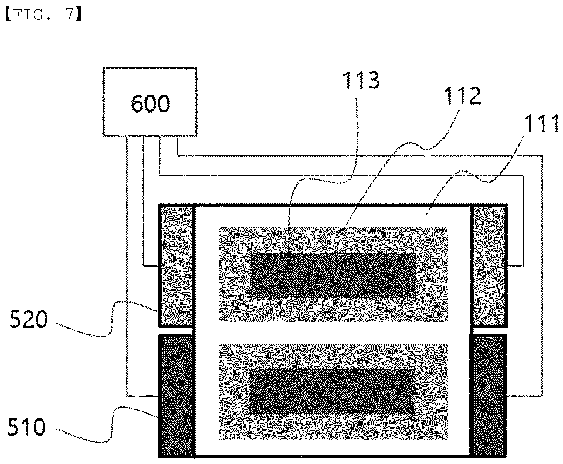

FIG. 7 is a diagram illustrating another embodiment of making application thicknesses of the heating bodies 110 and 120 different from each other. The application thickness becomes smaller from the center to the outer side to make the center 113 hot and make the outer sides 111 and 112 relatively less hot or the application thickness becomes greater from the center to the outer side to make the outer sides 111 and 112 hot and make the center 113 relatively less hot, such that various heating forms of existing cook utensils may be intuitively simulated.

Meanwhile, in the electric grill 1000 using the heating paint of the present invention, a temperature display unit 700 of which a color is differently displayed depending on a temperature of the grilling plate 100 may be formed on one side of the grilling plate 100 so that the user may visually recognize the temperature of the grilling plate 100. In this case, the temperature display unit 700 may be formed by applying a color-changing material of which a color is changed depending on the temperature of the grilling plate 100.

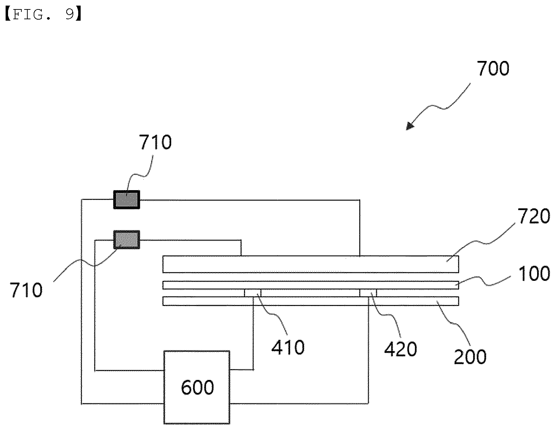

Meanwhile, the temperature display unit 700 may be formed through a plurality of temperature sensors disposed at a plurality of positions and a plurality of light emitting diodes (LEDs) 710 displaying different colors depending on temperatures measured according to positions. FIG. 9 is a conceptual diagram for describing an example of a temperature display unit using LEDs 710. Referring to FIG. 9, a first temperature sensor 410 and a second temperature sensor 420 are disposed between the grilling plate 100 and the heating bodies 110 and 120, and the heat insulating material 200, a plurality of LEDs 710 display different colors according to temperatures measured by the respective temperature sensors 400, and the colors displayed by the LEDs 710 are displayed as different colors so that the user may recognize the temperature of the grilling plate 100 through a waveguide 720 disposed on one side of the grilling plate 100. That is, in a case where the LEDs 710 are disposed close to the grilling plate 100, the LEDs 710 may be damaged by a temperature rise of the grilling plate 100, and thus, the LEDs 710 are installed relatively away from the grilling plate 100, and the display colors of the LEDs 710 are transferred to the waveguide 720 having relatively excellent heat resistance characteristics.

As described above, in the electric grill 1000 using the heating paint of the present invention, the temperature of the grilling plate 100 may be precisely controlled by directly applying the heating paste to a bottom surface of the grilling plate 100, the heating region may be divided and controlled by dividing and combining the electrode pairs 500 supplying the electricity to the heating bodies 110 and 120 and the application regions, the application thicknesses, and the like, of the heating bodies 110 and 120, and various heating forms may be implemented according to cooking conditions.

### [Detailed Description of Main Elements]

| | | | |
|---|---|---|---|
| 1000: | electric grill of the present invention | | |
| 100: | grilling plating | | |
| 110: | first heating body | 120: | second heating |
| | | | body |
| 111: | first application layer | 112: | second application layer |
| 113: | third application layer | | |
| 200: | heat insulating material | | |
| 300: | lower plate | | |
| 400: | temperature sensor | | |
| 410: | first temperature sensor | 420: | second |
| | | | temperature sensor |
| 500: | electrode pair | | |
| 510: | first electrode pair | 520: | second |
| | | | electrode pair |
| 530: | third electrode pair | 540: | fourth |
| | | | electrode pair |
| 600: | control unit | | |
| 700: | temperature display unit | | |
| 710: | LED | 720: | waveguide |

### [Industrial Applicability]

The present invention relates to an electric grill and has industrial applicability.

## Claims

1. An electric grill using a heating paint, comprising:
a grilling plate on which food to be cooked is put;
a heating body applied and disposed on a lower portion of the grilling plate and capable of heating the grilling plate;
a heat insulating material disposed below the heating body; and
a temperature sensor disposed between the heating body and the heat insulating material and measuring a temperature of an upper plate,
wherein the heating body is produced by applying a carbon nanotube (CNT) heating paste to the lower portion of the grilling plate, and
electrode pairs for supplying electricity to the heating body are disposed along both edges of the heating body facing each other.

2. The electric grill using a heating paint of claim 1, wherein the electrode pairs disposed along the both edges of the heating body facing each other are formed to be divided into a plurality of electrode pairs, and
a heating region is controlled by supplying electricity to only some of the plurality of electrode pairs.

3. The electric grill using a heating paint of claim 2, wherein the grilling plate is surface-treated so that the heating region is divided and displayed in response to the division of the electrode pairs.

4. The electric grill using a heating paint of claim 2, wherein the heating body is formed by applying the CNT heating paste to the lower portion of the grilling plate, and the CNT heating paste is applied so that the heating body has a plurality of divided regions.

5. The electric grill using a heating paint of claim 4, wherein the electrode pairs for supplying the electricity to each of the divided heating bodies are disposed along both edges of the divided heating bodies.

6. The electric grill using a heating paint of claim 5, wherein electrode pairs disposed adjacent to each other among the electrode pairs disposed along the both edges of the divided heating bodies are arranged at upper and lower portions based on an intermediate insulating material.

7. The electric grill using a heating paint of claim 1, wherein the heating body is formed by applying the CNT heating paste to the lower portion of the grilling plate, and
application thicknesses of the heating paste are different from each other depending on positions.

8. The electric grill using a heating paint of claim 7, wherein electrodes disposed along the both edges of the heating body facing each other are formed to be divided into a plurality of electrodes, and
application thicknesses of the heating paste are different from each other in a direction of the both edges where the electrodes are disposed.

9. The electric grill using a heating paint of claim 7, wherein the application thickness of the heating paste becomes smaller from the center to an outer side.

10. The electric grill using a heating paint of claim 1, wherein a temperature display unit of which a color is differently displayed depending on a temperature of the grilling plate is formed on one side of the grilling plate.

11. The electric grill using a heating paint of claim 10, wherein the temperature display unit includes a color-changing material of which a color is changed depending on the temperature of the grilling plate.

12. The electric grill using a heating paint of claim 10, wherein the temperature display unit includes:
a plurality of temperature sensors disposed at a plurality of positions; and
a plurality of light emitting diodes (LEDs) displaying different colors depending on temperatures measured according to positions.

13. The electric grill using a heating paint of claim 11, wherein a waveguide is disposed on one side of the plurality of LEDs, and
the waveguide is disposed on one side of the grilling plate.
